# EUROPÄISCHE PATENTSCHRIFT

(11) **EP 1 815 586 B1**
(45) Veröffentlichungstag und Bekanntmachung des Hinweises auf die Patenterteilung: **23.10.2013**
(21) Anmeldenummer: 04797258.3
(22) Anmeldetag: 22.11.2004
(51) Int. Cl.: H02M 7/483

(54) **UMRICHTERSCHALTUNG ZUR SCHALTUNG EINER VIELZAHL VON SCHALTSPANNUNGSNIVEAUS**
CONVERTER CIRCUIT FOR SWITCHING A NUMBER OF SWITCHING VOLTAGE LEVELS
CIRCUIT CONVERTISSEUR CONCU POUR COMMUTER UNE PLURALITE DE NIVEAUX DE TENSION DE COMMUTATION

(43) Veröffentlichungstag der Anmeldung: 08.08.2007
(73) Patentinhaber: ABB RESEARCH LTD., 8050 Zürich (CH)
(72) Erfinder: STEIMER, Peter, CH-5424 Unterehrendingen (CH); BARBOSA, Peter, CH-5405 Dättwil (CH); MEYSENC, Luc, F-38120 Saint Egrève (FR)
(74) Vertreter: ABB Patent Attorneys
(86) Internationale Anmeldenummer: PCT/CH2004/000701
(87) Internationale Veröffentlichungsnummer: WO 2006/053448

(56) Entgegenhaltungen:
- WO-A-93/02501
- GATEAU G ET AL: "STACKED MULTICELL CONVERTER (SMC): TOPOLOGY AND CONTROL" EPE 2001. 9TH. EUROPEAN CONFERENCE ON POWER ELECTRONICS AND APPLICATIONS. (CD-ROM VERSION). GRAZ, AUG. 27 - 29, 2001, EPE . EUROPEAN CONFERENCE ON POWER ELECTRONICS AND APPLICATIONS, BRUSSELS : EPE ASSOCIATION, BE, 2001, Seiten 1-10, XP001044195 ISBN: 90-75815-06-9

## Beschreibung

### Technisches Gebiet

Die Erfindung bezieht sich auf das Gebiet der Leistungselektronik. Sie geht aus von einer Umrichterschaltung zur Schaltung einer Vielzahl von Schaltspannungsniveaus gemäss dem Oberbegriff des unabhängigen Anspruchs.

### Stand der Technik

Umrichterschaltungen werden heute in einer Fülle von leistungselektronischen Anwendungen eingesetzt. Die Anforderungen an eine solche Umrichterschaltung sind dabei zum einen, möglichst wenig Oberschwingungen an Phasen eines an die Umrichterschaltung gängigerweise angeschlossenen elektrischen Wechselspannungsnetzes zu erzeugen und zum anderen mit einer möglichst geringen Anzahl an elektronischen Bauelementen möglichst grosse Leistungen zu übertragen. Eine geeignete Umrichterschaltung zur Schaltung einer Vielzahl von Schaltspannungsniveaus ist in der DE 692 05 413 T2 bzw. in der WO 93/02501 angegeben. Darin sind n erste Schaltgruppen für jede Phase vorgesehen, wobei die n-te erste Schaltgruppe durch einen ersten Leistungshalbleiterschalter und einen zweiten Leistungshalbleiterschalter gebildet ist und die erste erste Schaltgruppe bis zur (n-1)-ten Schaltgruppe jeweils durch einen ersten Leistungshalbleiterschalter und einen zweiten Leistungshalbleiterschalter und durch einen mit dem ersten und zweiten Leistungshalbleiterschalter verbundenen Kondensator gebildet sind, wobei n ≥ 2 ist. Jede der n ersten Schaltgruppen ist parallel mit der jeweils benachbarten ersten Schaltgruppe verbunden, wobei der erste und der zweite Leistungshalbleiterschalter der ersten ersten Schaltgruppe miteinander verbunden sind. Der erste und der zweite Leistungshalbleiterschalter ist jeweils durch einen Bipolartransistor mit isoliert angeordneter Ansteuerelektrode (IGBT - Insulated Gate Bipolartransistor) und durch eine dem Bipolartransistor antiparallel geschaltete Diode gebildet.

Eine weitere Umrichterschaltung zur Schaltung einer Vielzahl von Schaltspannungsniveaus ist in "Stacked Multicell Converter (SMC): Topology and control, G. Gateau et al, EPE 2001" angegeben.

Problematisch bei einer Umrichterschaltung zur Schaltung einer Vielzahl von Schaltspannungsniveaus nach der DE 692 05 413 T2 bzw. nach der WO 93/02501 ist, dass die in der Umrichterschaltung während des Betriebs gespeicherte elektrische Energie sehr hoch ist. Da die elektrische Energie in den Kondensatoren der n ersten Schaltgruppen der Umrichterschaltung gespeichert ist, müssen die Kondensatoren für diese elektrische Energie, d.h. bezüglich ihre Spannungsfestigkeit und/oder ihrer Kapazität, ausgelegt werden. Dies bedingt aber Kondensatoren mit grosser Baugrösse, die entsprechend teuer sind. Zudem benötigt die Umrichterschaltung aufgrund der bezüglich der Baugrösse grossen Kondensatoren viel Platz, so dass ein platzsparender Aufbau, wie er für viele Anwendungen, beispielsweise für Traktionsanwendungen, gefordert ist, nicht möglich ist. Weiterhin bewirkt der Einsatz der bezüglich der Baugrösse grossen Kondensatoren einen hohen Montage- und Wartungsaufwand.

### Darstellung der Erfindung

Aufgabe der Erfindung ist es deshalb, eine Umrichterschaltung zur Schaltung einer Vielzahl von Schaltspannungsniveaus anzugeben, die möglichst wenig elektrische Energie während ihres Betriebes speichert und platzsparend realisiert werden kann. Diese Aufgabe wird durch die Merkmale des Anspruchs 1 gelöst. In den abhängigen Ansprüchen sind vorteilhafte Weiterbildungen der Erfindung angegeben.

Die erfindungsgemässe Umrichterschaltung zur Schaltung einer Vielzahl von Schaltspannungsniveaus umfasst n für jede Phase vorgesehene ersten Schaltgruppen, wobei die n-te erste Schaltgruppe durch einen ersten ansteuerbaren bidirektionalen Leistungshalbleiterschalter und einen zweiten ansteuerbaren bidirektionalen Leistungshalbleiterschalter gebildet ist und die erste erste Schaltgruppe bis zur (n-1)-ten Schaltgruppe jeweils durch einen ersten ansteuerbaren bidirektionalen Leistungshalbleiterschalter und einen zweiten ansteuerbaren bidirektionalen Leistungshalbleiterschalter und durch einen mit dem ersten und zweiten ansteuerbaren bidirektionalen Leistungshalbleiterschalter verbundenen Kondensator gebildet sind. Jede der n ersten Schaltgruppen ist bei mehreren vorhandenen ersten Schaltgruppen verkettet mit der jeweils benachbarten ersten Schaltgruppe verbunden und der erste und der zweite ansteuerbare bidirektionale Leistungshalbleiterschalter der ersten ersten Schaltgruppe sind miteinander verbunden. Efindungsgemäss ist n ≥ 1 und sind p zweite Schaltgruppen und p dritte Schaltgruppen vorgesehen, welche jeweils einen ersten ansteuerbaren bidirektionalen Leistungshalbleiterschalter, einen zweiten ansteuerbaren bidirektionalen Leistungshalbleiterschalterund einen Kondensator aufweist, wobei p ≥ 1 ist. Jede der p zweiten Schaltgruppen ist bei mehreren vorhandenen zweiten Schaltgruppen verkettet mit der jeweils benachbarten zweiten Schaltgruppe verbunden. Weiterhin ist jede der p dritten Schaltgruppen bei mehreren vorhandenen dritten Schaltgruppen verkettet mit der jeweils benachbarten dritten Schaltgruppe verbunden. Die erste zweite und die erste dritte Schaltgruppe weist zudem jeweils einen zu dem jeweiligen zweiten ansteuerbaren bidirektionalen Leistungshalbleiterschalter antiseriell geschalteten dritten ansteuerbaren bidirektionalen Leistungshalbleiterschalter auf, wobei die erste zweite Schaltgruppe mit dem ersten ansteuerbaren bidirektionalen Leistungshalbleiterschalter der n-ten ersten Schaltgruppe verbunden ist und die erste dritte Schaltgruppe mit dem zweiten ansteuerbaren bidirektionalen Leistungshalbleiterschalter der n-ten ersten Schaltgruppe verbunden ist. Desweiteren ist der Kondensator der p-ten zweiten Schaltgruppe mit dem Kondensator der p-ten dritten Schaltgruppe seriell verbunden.

Durch die vorgesehenen p zweiten Schaltgruppen und p dritten Schaltgruppen und deren vorstehend beschriebenen Verbindungen sind die p zweiten Schaltgruppen beispielsweise nur bei der positiven Halbschwingung bezüglich der Phasenausgangswechselspannung und die p dritten Schaltgruppen nur bei der negativen Halbschwingung am Betrieb der erfindungsgemässen Umrichterschaltung beteiligt. Dadurch kann die in der Umrichterschaltung, insbesondere in den Kondensatoren der p zweiten und dritten Schaltgruppen, gespeicherte elektrische Energie vorteilhaft reduziert werden. Weiterhin dienen die n ersten Schaltgruppen nur zur Balancierung der Phasenausgangswechselspannung, so dass bei mehreren vorhandenen ersten Schaltgruppen die Kondensatoren der n ersten Schaltgruppen im balancierten Zustand im wesentlichen keinen Strom führen und somit auch im wesentlichen keine elektrische Energie speichern. Somit kann die gespeicherte elektrische Energie der Umrichterschaltung insgesamt klein gehalten werden, wodurch die Kondensatoren der Umrichterschaltung nur für eine kleine zu speichernde elektrische Energie, d.h. bezüglich ihre Spannungsfestigkeit und/oder ihrer Kapazität, ausgelegt werden müssen. Aufgrund der geringen Baugrösse der Kondensatoren benötigt die Umrichterschaltung sehr wenig Platz, so dass vorteilhaft ein platzsparender Aufbau, wie er für viele Anwendungen, beispielsweise für Traktionsanwendungen, gefordert ist, möglich ist. Zudem kann durch die geringe Baugrösse der Kondensatoren auch der Montage- und Wartungsaufwand vorteilhaft gering gehalten werden.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Umrichterschaltung,
- Fig. 2: eine zweite Ausführungsform einer erfindungsgemässen Umrichterschaltung und
- Fig. 3: eine dritte Ausführungsform einer erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und hat keine beschränkende Wirkung.

### Wege zur Ausführung der Erfindung

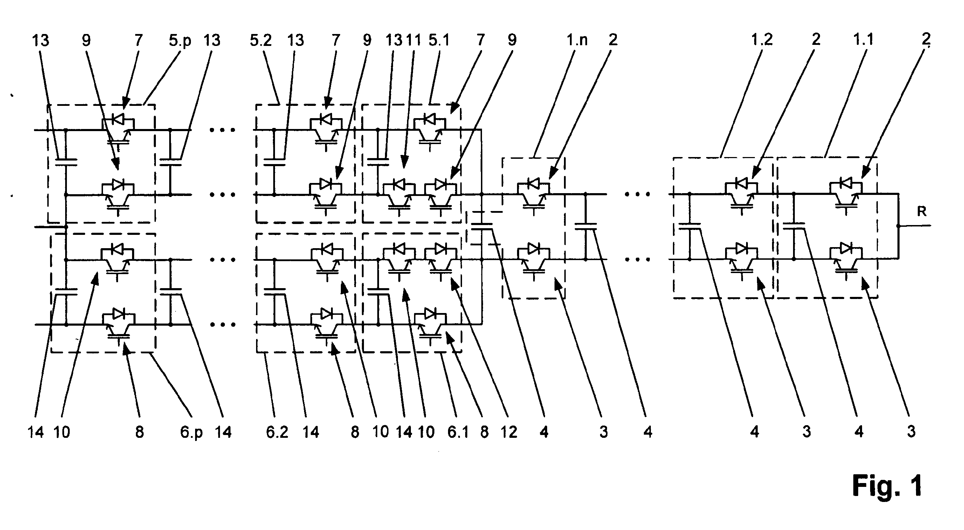

In Fig. 1 ist eine, insbesondere einphasige, Ausführungsform einer erfindungsgemässen Umrichterschaltung zur Schaltung einer Vielzahl von Schaltspannungsniveaus gezeigt. Darin umfasst die Umrichterschaltung n für jede Phase R, S, T vorgesehene erste Schaltgruppen 1.1,..., 1.n, wobei die n-te erste Schaltgruppe 1.n durch einen ersten ansteuerbaren bidirektionalen Leistungshalbleiterschalter 2 und einen zweiten ansteuerbaren bidirektionalen Leistungshalbleiterschalter 3 gebildet ist und die erste erste Schaltgruppe 1.1 bis zur (n-1)-ten Schaltgruppe 1 (n-1) jeweils durch einen ersten ansteuerbaren bidirektionalen Leistungshalbleiterschalter 2 und einen zweiten ansteuerbaren bidirektionalen Leistungshalbleiterschalter 3 und durch einen mit dem ersten und zweiten ansteuerbaren bidirektionalen Leistungshalbleiterschalter 2, 3 verbundenen Kondensator 4 gebildet sind, wobei erfindungsgemäss n ≥ 1 und jede der n ersten Schaltgruppen 1.1,..., 1.n verkettet mit der jeweils benachbarten ersten Schaltgruppe 1.1,...,1.n verbunden ist. Gemäss Fig. 1 sind der erste und der zweite ansteuerbare bidirektionale Leistungshalbleiterschalter 2, 3 der ersten ersten Schaltgruppe 1.1 miteinander verbunden. Der Verbindungspunkt des ersten und des zweiten Leistungshalbleiterschalters 2, 3 der ersten ersten Schaltgruppe 1.1 bildet gemäss Fig. 1 eine Phasenanschluss, insbesondere für die Phase R.

Erfindungsgemäss sind nun p zweite Schaltgruppen 5.1, ..., 5.p und p dritte Schaltgruppen 6.1, ..., 6.p vorgesehen, welche jeweils einen ersten ansteuerbaren bidirektionalen Leistungshalbleiterschalter 7, 8, einen zweiten ansteuerbaren bidirektionalen Leistungshalbleiterschalter 9, 10und einen Kondensator 13, 14 aufweist, wobei p ≥ 1 ist. Da es sich gemäss Fig. 1 sowohl bei jeder der p zweiten Schaltgruppen 5.1, ..., 5.p als auch bei jeder der p dritten Schaltgruppen 6.1, ..., 6.p um einen Vierpol handelt, ist jede der p zweiten Schaltgruppen 5.1, ..., 5.p nach der Vierpoltheorie verkettet mit der jeweils benachbarten zweiten Schaltgruppe 5.1, ..., 5.p verbunden. Weiterhin ist jede der p dritten Schaltgruppen 6.1, ..., 6.p nach der Vierpoltheorie verkettet mit der jeweils benachbarten dritten Schaltgruppe 6.1, ..., 6.p verbunden. Darüber hinaus weist die erste zweite und die erste dritte Schaltgruppe 5.1, 6.1 jeweils einen zu dem jeweiligen zweiten ansteuerbaren bidirektionalen Leistungshalbleiterschalter 9, 10 antiseriell geschalteten dritten ansteuerbaren bidirektionalen Leistungshalbleiterschalter 11, 12 auf, wobei die erste zweite Schaltgruppe 5.1 mit dem ersten ansteuerbaren bidirektionalen Leistungshalbleiterschalter 2 der n-ten ersten Schaltgruppe 1.n verbunden ist und die erste dritte Schaltgruppe 6.1 mit dem zweiten ansteuerbaren bidirektionalen Leistungshalbleiterschalter 3 der n-ten ersten Schaltgruppe 1.n verbunden ist. Schliesslich ist der Kondensator 13 der p-ten zweiten Schaltgruppe 5.p mit dem Kondensator 14 der p-ten dritten Schaltgruppe 6.p seriell verbunden. Mittels der vorgesehenen p zweiten Schaltgruppen 5.1, ..., 5.p und p dritten Schaltgruppen 6.1, ..., 6.p und deren beschriebenen Verbindungen jeweils untereinander, zueinander und zu der n-ten ersten Schaltgruppe 1.n sind die p zweiten Schaltgruppen 5.1, ..., 5.p beispielsweise nur bei der positiven Halbschwingung bezüglich der Phasenausgangswechselspannung und die p dritten Schaltgruppen 6.1, ..., 6.p nur bei der negativen Halbschwingung bezüglich der Phasenausgangswechselspannung am Betrieb der erfindungsgemässen Umrichterschaltung beteiligt. Somit kann die in der Umrichterschaltung, insbesondere in den Kondensatoren 13, 14 der p zweiten und dritten Schaltgruppen 5.1, ..., 5.p; 6.1, ..., 6.p, gespeicherte elektrische Energie vorteilhaft reduziert werden. Ferner dienen die n ersten Schaltgruppen 1.1,..., 1.n lediglich zur Balancierung der Phasenausgangswechselspannung, so dass die Kondensatoren 4 der n ersten Schaltgruppen 1.1,...,1.n im balancierten, d.h. im ausgeglichenen Zustand der Phasenausgangswechselspannung im wesentlichen keinen Strom führen und somit auch im wesentlichen keine elektrische Energie speichern. Damit kann die gespeicherte elektrische Energie der erfindungsgemässen Umrichterschaltung insgesamt klein gehalten werden, wodurch die Kondensatoren 4, 13, 14 der Umrichterschaltung nur für eine kleine zu speichernde elektrische Energie, d.h. bezüglich ihre Spannungsfestigkeit und/oder ihrer Kapazität, ausgelegt werden müssen. Aufgrund der geringen Baugrösse der Kondensatoren 4, 13, 14 benötigt die Umrichterschaltung ein Minimum an Platz, so dass vorteilhaft ein platzsparender Aufbau, wie er für viele Anwendungen, beispielsweise für Traktionsanwendungen, gefordert ist, ermöglich ist. Desweiteren kann durch die geringe Baugrösse der Kondensatoren 4, 13, 14 auch der Montage- und Wartungsaufwand vorteilhaft klein gehalten werden.

Es sei erwähnt, dass die antiserielle Schaltung des zweiten und dritten ansteuerbaren bidirektionalen Leistungshalbleiterschalters 9, 10, 11, 12 derart zu verstehen ist, dass der zweite und dritte ansteuerbare bidirektionale Leistungshalbleiterschalters 9, 10, 11, 12 jeweils eine zueinander entgegengesetzte gesteuerte Hauptstromrichtung aufweist.

Gemäss Fig. 1 weist die n-te erste Schaltgruppe 1.n einen mit dem ersten und zweiten ansteuerbaren bidirektionalen Leistungshalbleiterschalter 2, 3 der n-ten ersten Schaltgruppe 1.n verbundenen Kondensator 4 auf, wobei die erste zweite Schaltgruppe 5.1 mit dem Kondensator 4 der n-ten ersten Schaltgruppe 1.n verbunden ist und die erste dritte Schaltgruppe 6.1 mit dem Kondensator 4 der n-ten ersten Schaltgruppe 1.n verbunden ist. Durch den Kondensator 4 der n-ten ersten Schaltgruppe 1.n wird vorteilhaft erreicht, dass insbesondere bei einer gewünschten Phasenausgangsspannung von 0V, diese Phasenausgangsspannung stabilisiert und somit problemlos ohne Störeffekte erreicht werden kann. Der Kondensator 4 der n-ten ersten Schaltgruppe 1.n dient nur der Spannungsbegrenzung beziehungsweise der Spannungsstabilisierung und ist somit nicht als Spannungsquelle anzusehen.

Gemäss Fig. 1 sind der erste und zweite ansteuerbare bidirektionale Leistungshalbleiterschalter 7, 9 der ersten zweiten Schaltgruppe 5.1 miteinander verbunden, wobei der Verbindungspunkt des ersten und zweiten ansteuerbaren bidirektionalen Leistungshalbleiterschalters 7, 9 der ersten zweiten Schaltgruppe 5.1 mit dem Verbindungspunkt des Kondensators 4 der n-ten ersten Schaltgruppe 1.n und dem ersten ansteuerbaren bidirektionalen Leistungshalbleiterschalter 2 der n-ten ersten Schaltgruppe 1.n verbunden ist. Weiterhin sind der erste und dritte ansteuerbare bidirektionale Leistungshalbleiterschalter 8, 12 der ersten dritten Schaltgruppe 6.1 miteinander verbunden, wobei der Verbindungspunkt des ersten und dritten ansteuerbaren bidirektionalen Leistungshalbleiterschalters 8, 12 der ersten dritten Schaltgruppe 6.1 mit dem Verbindungspunkt des Kondensators 4 der n-ten ersten Schaltgruppe 1.n und dem zweiten ansteuerbaren bidirektionalen Leistungshalbleiterschalter 3 der n-ten ersten Schaltgruppe 1.n verbunden ist.

Gemäss Fig. 1 ist bei der ersten zweiten Schaltgruppe 5.1 der erste und der dritte ansteuerbare bidirektionale Leistungshalbleiterschalter 7, 11 mit dem Kondensator 13 der ersten zweiten Schaltgruppe 5.1 verbunden. Ferner ist bei der ersten dritten Schaltgruppe 6.1 der erste und der zweite ansteuerbare bidirektionale Leistungshalbleiterschalter 8, 10 mit dem Kondensator 14 der ersten dritten Schaltgruppe 6.1 verbunden. Zudem ist bei der zweiten zweiten bis zur p-ten zweiten Schaltgruppe 5.2, ..., 5.p und bei der zweiten dritten bis zur p-ten dritten Schaltgruppe 6.2, ..., 6.p jeweils der erste und der zweite ansteuerbare bidirektionale Leistungshalbleiterschalter 7, 9, 8, 10 mit dem Kondensator 13, 14 der zugehörigen Schaltgruppe 5.2, ..., 5.p; 6.2, ..., 6.p verbunden.

Es ist denkbar, dass die Anzahl der n ersten Schaltgruppen 1.1,..., 1.n der Anzahl der p zweiten und dritten Schaltgruppen 5.1, ..., 5.p; 6.1, ..., 6.p entspricht. Vorteilhaft können dadurch allgemein (2n+1) Schaltspannungsniveaus der erfindungsgemässen Umrichterschaltung geschalten werden.

Alternativ ist es auch denkbar, die Anzahl der n ersten Schaltgruppen 1.1,..., 1.n kleiner als die Anzahl der p zweiten und dritten Schaltgruppen 5.1, ..., 5.p; 6.1, ..., 6.p ist. Daraus resultiert vorteilhaft, dass weniger erste Schaltgruppen 1.1,..., 1.n und damit weniger erste und zweite Leistungshalbleiterschalter 2, 3 und weniger Kondensatoren 4 benötigt werden und die erfindungsgemässe Umrichterschaltung somit insgesamt weiter bezüglich ihres Platzbedarfes reduziert werden kann.

Weiterhin ist es auch denkbar, dass die Anzahl der n ersten Schaltgruppen 1.1,..., 1.n grösser als die Anzahl der p zweiten und dritten Schaltgruppen 5.1, ..., 5.p; 6.1, ..., 6.p ist.

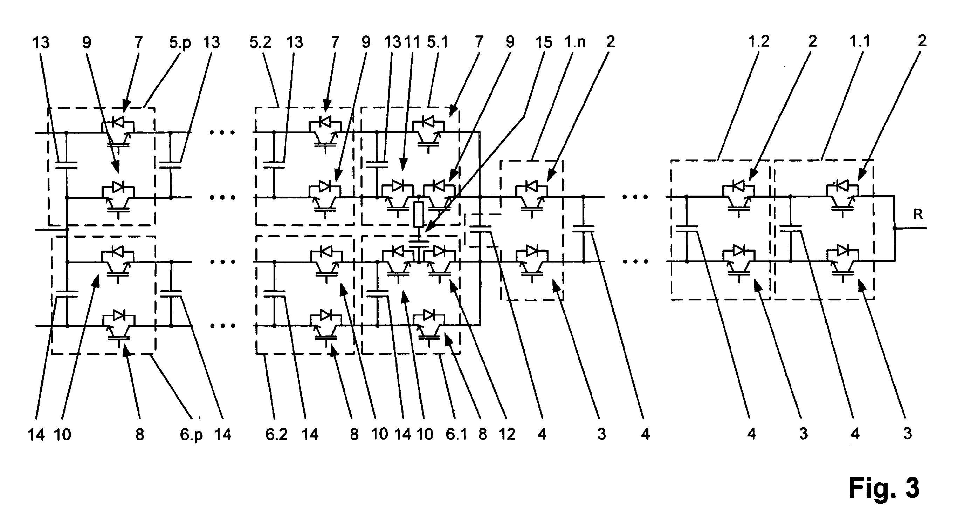

Allgemein ist bei der erfindungsgemässen Umrichterschaltung der jeweilige erste, zweite und dritte ansteuerbare bidirektionale Leistungshalbleiterschalter 2, 3, 7, 8, 9, 10, 11, 12 der n ersten Schaltgruppen 1.1,..., 1.n und der p zweiten und dritten Schaltgruppen 5.1, ..., 5.p; 6.1, ..., 6.p durch ein ansteuerbares Leistungshalbleiterbauelement mit unidirektionaler Stromführungsrichtung, beispielsweise durch einen Bipolartransistor mit isoliert angeordneter Ansteuerelektrode (IGBT - Insulated Gate Bipolartransistor), und durch ein dazu antiparallel geschaltetes passives nicht-ansteuerbares Leistungshalbleiterbauelement mit unidirektionaler Stromführungsrichtung, beispielsweise durch eine Diode, gebildet. Gemäss Fig. 1 sind die ersten und zweiten ansteuerbaren bidirektionalen Leistungshalbleiterschalter 2, 3, 7, 8, 9, 10 innerhalb der jeweiligen Schaltgruppe 1.1,..., 1.n; 5.1, ..., 5.p; 6.1, ..., 6.p derart verschaltet, dass sie eine entgegengesetzte gesteuerte Hauptstromrichtung aufweisen, d.h. die ansteuerbaren Leistungshalbleiterbauelemente mit unidirektionaler Stromführungsrichtung jeweils eine zueinander entgegengesetzte gesteuerte Hauptstromrichtung aufweisen. Weiterhin ist bei der ersten zweiten und bei der ersten dritten Schaltgruppe 5.1, 6.1, wie bereits erwähnt, der dritte ansteuerbare bidirektionale Leistungshalbleiterschalter 11, 12 zu dem jeweiligen zweiten ansteuerbaren bidirektionalen Leistungshalbleiterschalter 9, 10 antiseriell geschaltet, d.h. beispielsweise gemäss Fig. 1 sind die als Dioden ausgeführte passive nichtansteuerbare Leistungshalbleiterbauelemente der zweiten und dritten ansteuerbaren bidirektionalen Leistungshalbleiterschalter 9, 10, 11, 12 an ihren Anoden miteinander verbunden und die als IGBTs ausgebildete ansteuerbare Leistungshalbleiterbauelemente mit ihren Emittern miteinander verbunden. Es ist aber auch denkbar, den jeweiligen zweiten ansteuerbaren bidirektionalen Leistungshalbleiterschalter 9, 10 mit dem dritten ansteuerbaren bidirektionalen Leistungshalbleiterschalter 11, 12 derart antiseriell zu verschalten, dass die als Dioden ausgeführten passiven nicht-ansteuerbaren Leistungshalbleiterbauelemente der zweiten und dritten ansteuerbaren bidirektionalen Leistungshalbleiterschalter 9, 10, 11, 12 an ihren Kathoden miteinander verbunden sind und die als IGBTs ausgebildete ansteuerbare Leistungshalbleiterbauelemente mit ihren Kollektoren miteinander verbunden sind. Diese Verschaltung ist in einer dritten Ausführungsform der erfindungsgemässen Umrichterschaltung nach Fig. 3 bei dem zweiten und dritten ansteuerbaren bidirektionalen Leistungshalbleiterschalter 9, 11 der ersten zweiten Schaltgruppe 5.1 gezeigt, welche dritte Ausführungsform nachfolgend detailliert beschrieben ist. Diese Verschaltung kommt einem platzmässigen Tausch des zweiten und dritten ansteuerbaren bidirektionalen Leistungshalbleiterschalters 9, 10, 11, 12 innerhalb der jeweiligen Schaltgruppe 5.1, 6.1 der ersten Ausführungsform gemäss Fig. 1 gleich, wobei die Wirkungsweise identisch der vorstehend beschrieben antiseriellen Schaltung des zweiten und dritten ansteuerbaren bidirektionalen Leistungshalbleiterschalters 9, 10, 11, 12 ist.

Es hat sich als vorteilhaft erwiesen, dass bei den n ersten Schaltgruppen 1.1,..., 1.n die zwei ersten ansteuerbaren bidirektionalen Leistungshalbleiterschalter 2 jeweils benachbarter erster Schaltgruppen 1.1,..., 1.n in einem Modul integriert sind, d.h. dass bei mehreren vorhandenen ersten Schaltgruppen 1.1,..., 1.n der erste ansteuerbare bidirektionale Leistungshalbleiterschalter 2 der n-ten ersten Schaltgruppe 1.n und der erste ansteuerbare bidirektionale Leistungshalbleiterschalter 2 der (n-1)-ten ersten Schaltgruppe 1.(n-1) in einem Modul integriert sind und der erste ansteuerbare bidirektionale Leistungshalbleiterschalter 2 der (n-1)-ten ersten Schaltgruppe 1.(n-1) und der erste ansteuerbare bidirektionale Leistungshalbleiterschalter 2 der (n-2)-ten ersten Schaltgruppe 1.(n-2) in einem Modul integriert sind usw.. Weiterhin hat es sich als vorteilhaft erwiesen, dass die zwei zweiten ansteuerbaren bidirektionalen Leistungshalbleiterschalter 3 jeweils benachbarter erster Schaltgruppen 1.1,..., 1.n in einem Modul integriert sind, d.h. bei mehreren vorhandenen ersten Schaltgruppen 1.1,..., 1.n der zweite ansteuerbare bidirektionale Leistungshalbleiterschalter 3 der n-ten ersten Schaltgruppe 1.n und der zweite ansteuerbare bidirektionale Leistungshalbleiterschalter 3 der (n-1)-ten ersten Schaltgruppe 1 (n-1) in einem Modul integriert sind und der zweite ansteuerbare bidirektionale Leistungshalbleiterschalter 3 der (n-1)-ten ersten Schaltgruppe 1.(n-1) und der zweite ansteuerbare bidirektionale Leistungshalbleiterschalter 3 der (n-2)-ten ersten Schaltgruppe 1.(n-2) in einem Modul integriert sind usw.. Die vorstehend genannten Module sind gängigerweise Standard-Halbbrücken-Module und dementsprechend einfach aufgebaut, wenig störanfällig und zudem kostengünstig.

Es ist auch denkbar, dass im Falle mehrerer vorhandener erster Schaltgruppen 1.1,..., 1.n bei den n ersten Schaltgruppen 1.1,..., 1.n jeweils der erste ansteuerbare bidirektionale Leistungshalbleiterschalter 2 und der zweite ansteuerbare bidirektionale Leistungshalbleiterschalter 3 in einem Modul integriert ist. Wie bereits erwähnt sind solche Module üblicherweise Standard-Halbbrücken-Module und dementsprechend einfach aufgebaut, wenig störanfällig und zudem kostengünstig.

Ferner hat es sich als vorteilhaft erwiesen, dass im Falle mehrerer vorhandener zweiter Schaltgruppen 5.1,..., 5.p bei den p zweiten Schaltgruppen 5.1,..., 5.p die zwei ersten ansteuerbaren bidirektionalen Leistungshalbleiterschalter 7 jeweils benachbarter zweiter Schaltgruppen 5.1,..., 5.p in einem Modul, d.h. in der vorstehend für die n ersten Schaltgruppen 1.1,..., 1.n detailliert beschriebenen Weise, integriert sind. Ferner sind dann bei mehreren vorhandenen dritten Schaltgruppen 6.1,..., 6.p bei den p dritten Schaltgruppen 6.1,..., 6.p die zwei ersten ansteuerbaren bidirektionalen Leistungshalbleiterschalter 8 jeweils benachbarter dritter Schaltgruppen 6.1,..., 6.p in einem Modul, d.h. in der vorstehend für die n ersten Schaltgruppen 1.1,..., 1.n detailliert beschriebenen Weise, integriert.

Alternativ dazu ist es auch möglich, dass bei mehreren vorhandenen zweiten und dritten Schaltgruppen 5.1,..., 5.p; 6.1,..., 6.p bei den p zweiten und dritten Schaltgruppen 5.1,..., 5.p; 6.1,..., 6.p jeweils der erste ansteuerbare bidirektionale Leistungshalbleiterschalter 7, 8 und der zweite ansteuerbare bidirektionale Leistungshalbleiterschalter 9, 10 in einem Modul integriert ist. Die vorstehend genannten Module sind gängigerweise Standard-Module und dementsprechend einfach aufgebaut, wenig störanfällig und zudem kostengünstig.

Weiterhin ist es denkbar, dass der dritte ansteuerbare bidirektionale Leistungshalbleiterschalter 11 der ersten zweiten Schaltgruppe 5.1 und der dritte ansteuerbare bidirektionale Leistungshalbleiterschalter 12 der ersten dritten Schaltgruppe 6.1 in einem Modul integriert ist. Auch hier handelt es sich um Standard-Module mit den entsprechenden und bereits erwähnten Vorteilen.

Bei einer mehrphasig zu realisierenden erfindungsgemässen Umrichterschaltung sind die p-ten zweiten Schaltgruppen 5.p der Phasen R, S, T vorzugsweise parallel miteinander verbunden und die p-ten dritten Schaltgruppen 6.p der Phasen R, S, T parallel miteinander verbunden. Die jeweiligen Verbindungen erfolgen an den Kondensatoren 13 der jeweiligen p-ten zweiten Schaltgruppen 5.p beziehungsweise an den Kondensatoren 14 der jeweiligen p-ten dritten Schaltgruppen 6.p.

Um vorteilhaft bei einer mehrphasig realisierten Umrichterschaltung Platz einsparen zu können sind die Kondensatoren 13 der p-ten zweiten Schaltgruppen 5.p der Phasen R, S, T vorzugsweise zu einem Kondensator zusammengefasst. Zudem sind die Kondensatoren 14 der p-ten dritten Schaltgruppen 6.p der Phasen R, S, T vorzugsweise ebenfalls zu einem Kondensator zusammengefasst.

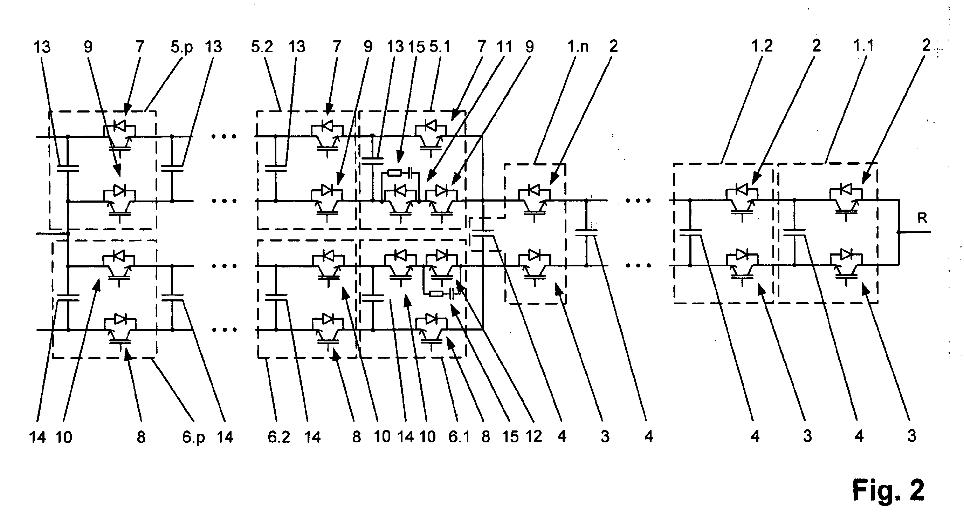

In Fig. 2 ist eine zweite Ausführungsform der erfindungsgemässen Umrichterschaltung gezeigt, welche sich von der ersten Ausführungsform gemäss Fig. 1 darin unterscheidet, dass parallel zum dritten ansteuerbaren bidirektionalen Leistungshalbleiterschalter 11 der ersten zweiten Schaltgruppe 5.1 ein Spannungsbegrenzungsnetzwerk 15 geschaltet ist und parallel zum dritten ansteuerbaren bidirektionalen Leistungshalbleiterschalter 12 der ersten dritten Schaltgruppe 6.1 ebenfalls ein Spannungsbegrenzungsnetzwerk 15 geschaltet ist. Das Spannungsbegrenzungsnetzwerk 15 kann optional gewählt werden und dient vorteilhaft der Stabilisierung der Phasenausgangsspannung, insbesondere bei einer gewünschten Phasenausgangsspannung von 0V insbesondere bei einer gewünschten Phasenausgangsspannung von 0V. Vorzugsweise weist das Spannungsbegrenzungsnetzwerk 15 einen Kondensator oder, wie in Fig. 2 gezeigt, eine Serienschaltung eines Widerstands mit einem Kondensator auf.

Alternativ zur zweiten Ausführungsform nach Fig. 2 ist in Fig. 3 eine dritte Ausführungsform der erfindungsgemässen Umrichterschaltung dargestellt. Die dritte Ausführungsform gemäss Fig. 3 unterscheidet sich von der zweiten Ausführungsform nach Fig. 2 darin, dass ein Spannungsbegrenzungsnetzwerk 15 mit dem Verbindungspunkt des zweiten und dritten ansteuerbaren Leistungshalbleiterschalters 9, 11 der ersten zweiten Schaltgruppe 5.1 und mit dem Verbindungspunkt des zweiten und dritten ansteuerbaren Leistungshalbleiterschalters 10, 12 der ersten dritten Schaltgruppe 6.1 verbunden ist. Das Spannungsbegrenzungsnetzwerk 15 kann optional gewählt werden und dient vorteilhaft der Stabilisierung der Phasenausgangsspannung, insbesondere bei einer gewünschten Phasenausgangsspannung von 0V insbesondere bei einer gewünschten Phasenausgangsspannung von 0V. Vorzugsweise weist das Spannungsbegrenzungsnetzwerk 15 einen Kondensator oder, wie in Fig. 3 gezeigt, eine Serienschaltung eines Widerstands mit einem Kondensator auf.

Insgesamt stellt die erfindungsgemässe Umrichterschaltung zur Schaltung einer Vielzahl von Schaltspannungsniveaus somit eine durch eine geringe gespeicherte elektrische Energie während ihres Betriebes und durch einen platzsparenden Aufbau gekennzeichnete und damit unkomplizierte, robuste und wenig störungsanfällige Lösung dar.

### Bezugszeichenliste

- 1.1, ..., 1.n: erste Schaltgruppen
- 2: erster ansteuerbarer bidirektionaler Leistungshalbleiterschalter der ersten Schaltgruppen
- 3: zweiter ansteuerbarer bidirektionaler Leistungshalbleiterschalter der ersten Schaltgruppen
- 4: Kondensator der ersten Schaltgruppen
- 5.1, ..., 5.p: zweite Schaltgruppen
- 6.1, ..., 6.p: dritte Schaltgruppen
- 7: erster ansteuerbarer bidirektionaler Leistungshalbleiterschalter der zweiten Schaltgruppen
- 8: erster ansteuerbarer bidirektionaler Leistungshalbleiterschalter der dritten Schaltgruppen
- 9: zweiter ansteuerbarer bidirektionaler Leistungshalbleiterschalter der zweiten Schaltgruppen
- 10: zweiter ansteuerbarer bidirektionaler Leistungshalbleiterschalter der dritten Schaltgruppen
- 11: dritter ansteuerbarer bidirektionaler Leistungshalbleiterschalter der zweiten Schaltgruppen
- 12: dritter ansteuerbarer bidirektionaler Leistungshalbleiterschalter der dritten Schaltgruppen
- 13: Kondensator der zweiten Schaltgruppen
- 14: Kondensator der dritten Schaltgruppen
- 15: Spännungsbegrenzungsnetzwerk

## Patentansprüche

1. Umrichterschaltung zur Schaltung einer Vielzahl von Schaltspannungsniveaus, mit n≥1 für jede Phase (R, S, T) vorgesehenen ersten Schaltgruppen (1.1,..., 1.n), wobei die n-te erste Schaltgruppe (1.n) durch einen ersten ansteuerbaren bidirektionalen Leistungshalbleiterschalter (2) und einen zweiten ansteuerbaren bidirektionalen Leistungshalbleiterschalter (3) gebildet ist und die erste erste Schaltgruppe (1.1) bis zur (n-1)-ten Schaltgruppe (1.(n-1)) jeweils durch einen ersten ansteuerbaren bidirektionalen Leistungshalbleiterschalter (2) und einen zweiten ansteuerbaren bidirektionalen Leistungshalbleiterschalter (3) und durch einen mit dem ersten und zweiten ansteuerbaren bidirektionalen Leistungshalbleiterschalter (2, 3) verbundenen Kondensator (4) gebildet sind, wobei jede der n ersten Schaltgruppen (1.1,..., 1.n) verkettet mit der jeweils benachbarten ersten Schaltgruppe (1.1,...,1.n) verbunden ist und der erste und der zweite ansteuerbare bidirektionale Leistungshalbleiterschalter (2, 3) der ersten ersten Schaltgruppe (1.1) miteinander verbunden sind, **dadurch gekennzeichnet,**
**dass** p zweite Schaltgruppen (5.1, ..., 5.p) und p dritte Schaltgruppen (6.1, ..., 6.p) vorgesehen sind, welche jeweils einen ersten ansteuerbaren bidirektionalen Leistungshalbleiterschalter (7, 8), einen zweiten ansteuerbaren bidirektionalen Leistungshalbleiterschalter (9, 10)und einen Kondensator (13, 14) aufweist, wobei p ≥ 1 ist und jede der p zweiten Schaltgruppen (5.1, ..., 5.p) verkettet mit der jeweils benachbarten zweiten Schaltgruppe (5.1, ..., 5.p) verbunden ist und jede der p dritten Schaltgruppen (6.1, ..., 6.p) verkettet mit der jeweils benachbarten dritten Schaltgruppe (6.1, ..., 6.p) verbunden ist,
**dass** die erste zweite und die erste dritte Schaltgruppe (5.1, 6.1) jeweils einen zu dem jeweiligen zweiten ansteuerbaren bidirektionalen Leistungshalbleiterschalter (9, 10) antiseriell geschalteten dritten ansteuerbaren bidirektionalen Leistungshalbleiterschalter (11, 12) aufweist, wobei die erste zweite Schaltgruppe (5.1) mit dem ersten ansteuerbaren bidirektionalen Leistungshalbleiterschalter (2) der n-ten ersten Schaltgruppe (1.n) verbunden ist und die erste dritte Schaltgruppe (6.1) mit dem zweiten ansteuerbaren bidirektionalen Leistungshalbleiterschalter (3) der n-ten ersten Schaltgruppe (1.n) verbunden ist, und
**dass** der Kondensator (13) der p-ten zweiten Schaltgruppe (5.p) mit dem Kondensator (14) der p-ten dritten Schaltgruppe (6.p) seriell verbunden ist.

2. Umrichterschaltung nach Anspruch 1, **dadurch gekennzeichnet, dass** die n-te erste Schaltgruppe (1.n) einen mit dem ersten und zweiten ansteuerbaren bidirektionalen Leistungshalbleiterschalter (2, 3) der n-ten ersten Schaltgruppe (1.n) verbundenen Kondensator (4) aufweist, wobei die erste zweite Schaltgruppe (5.1) mit dem Kondensator (4) der n-ten ersten Schaltgruppe (1.n) verbunden ist und die erste dritte Schaltgruppe (6.1) mit dem Kondensator (4) der n-ten ersten Schaltgruppe (1.n) verbunden ist.

3. Umrichterschaltung nach Anspruch 2, **dadurch gekennzeichnet, dass** der erste und zweite ansteuerbare bidirektionale Leistungshalbleiterschalter (7, 9) der ersten zweiten Schaltgruppe (5.1) miteinander verbunden sind, wobei der Verbindungspunkt des ersten und zweiten ansteuerbaren bidirektionalen Leistungshalbleiterschalters (7, 9) der ersten zweiten Schaltgruppe (5.1) mit dem Verbindungspunkt des Kondensators (4) der n-ten ersten Schaltgruppe (1.n) und dem ersten ansteuerbaren bidirektionalen Leistungshalbleiterschalter (2) der n-ten ersten Schaltgruppe (1.n) verbunden ist, und
dass der erste und dritte ansteuerbare bidirektionale Leistungshalbleiterschalter (8, 12) der ersten dritten Schaltgruppe (6.1) miteinander verbunden sind, wobei der Verbindungspunkt des ersten und dritten ansteuerbaren bidirektionalen Leistungshalbleiterschalters (8, 12) der ersten dritten Schaltgruppe (6.1) mit dem Verbindungspunkt des Kondensators (4) der n-ten ersten Schaltgruppe (1.n) und dem zweiten ansteuerbaren bidirektionalen Leistungshalbleiterschalter (3) der n-ten ersten Schaltgruppe (1.n) verbunden ist.

4. Umrichterschaltung nach einem der Ansprüche 1 bis 3, **dadurch gekennzeichnet, dass** bei der ersten zweiten Schaltgruppe (5.1) der erste und der dritte ansteuerbare bidirektionale Leistungshalbleiterschalter (7, 11) mit dem Kondensator (13) der ersten zweiten Schaltgruppe (5.1) verbunden ist, und
dass bei der ersten dritten Schaltgruppe (6.1) der erste und der zweite ansteuerbare bidirektionale Leistungshalbleiterschalter (8, 10) mit dem Kondensator (14) der ersten dritten Schaltgruppe (6.1) verbunden ist.

5. Umrichterschaltung nach einem der Ansprüche 1 bis 4, **dadurch gekennzeichnet, dass** bei der zweiten zweiten bis zur p-ten zweiten Schaltgruppe (5.2, ..., 5.p) und bei der zweiten dritten bis zur p-ten dritten Schaltgruppe (6.2, ..., 6.p) jeweils der erste und der zweite ansteuerbare bidirektionale Leistungshalbleiterschalter (7, 9, 8, 10) mit dem Kondensator (13, 14) der zugehörigen Schaltgruppe (5.2, ..., 5.p; 6.2, ..., 6.p) verbunden ist.

6. Umrichterschaltung nach einem der vorhergehenden Ansprüche, **dadurch gekennzeichnet, dass** parallel zum dritten ansteuerbaren bidirektionalen Leistungshalbleiterschalter (11) der ersten zweiten Schaltgruppe (5.1) ein Spannungsbegrenzungsnetzwerk (15) geschaltet ist, und
dass parallel zum dritten ansteuerbaren bidirektionalen Leistungshalbleiterschalter (12) der ersten dritten Schaltgruppe (6.1) ein Spannungsbegrenzungsnetzwerk (15) geschaltet ist.

7. Umrichterschaltung nach einem der Ansprüche 1 bis 5, **dadurch gekennzeichnet, dass** ein Spannungsbegrenzungsnetzwerk (15) mit dem Verbindungspunkt des zweiten und dritten ansteuerbaren Leistungshalbleiterschalters (9, 11) der ersten zweiten Schaltgruppe (5.1) und mit dem Verbindungspunkt des zweiten und dritten ansteuerbaren Leistungshalbleiterschalters (10, 12) der ersten dritten Schaltgruppe (6.1) verbunden ist.

8. Umrichterschaltung nach Anspruch 6 oder 7, **dadurch gekennzeichnet, dass** das Spannungsbegrenzungsnetzwerk (15) einen Kondensator aufweist.

9. Umrichterschaltung nach Anspruch 6 oder 7, **dadurch gekennzeichnet, dass** das Spannungsbegrenzungsnetzwerk (15) eine Serienschaltung eines Widerstands mit einem Kondensator aufweist.

10. Umrichterschaltung nach einem der Ansprüche 1 bis 9, **dadurch gekennzeichnet, dass** die Anzahl der n ersten Schaltgruppen (1.1,..., 1.n) der Anzahl der p zweiten und dritten Schaltgruppen (5.1, ..., 5.p; 6.1, ..., 6.p) entspricht.

11. Umrichterschaltung nach einem der Ansprüche 1 bis 9, **dadurch gekennzeichnet, dass** die Anzahl der n ersten Schaltgruppen (1.1,..., 1.n) kleiner als die Anzahl der p zweiten und dritten Schaltgruppen (5.1, ..., 5.p; 6.1, ..., 6.p) ist.

12. Umrichterschaltung nach einem der Ansprüche 1 bis 9, **dadurch gekennzeichnet, dass** die Anzahl der n ersten Schaltgruppen (1.1,..., 1.n) grösser als die Anzahl der p zweiten und dritten Schaltgruppen (5.1, ..., 5.p; 6.1, ..., 6.p) ist.

13. Umrichterschaltung nach einem vorhergehenden Ansprüche, **dadurch gekennzeichnet, dass** der jeweilige erste, zweite und dritte ansteuerbare bidirektionale Leistungshalbleiterschalter (2, 3, 7, 8, 9, 10, 11, 12) durch ein ansteuerbares Leistungshalbleiterbauelement mit unidirektionaler Stromführungsrichtung und durch ein dazu antiparallel geschaltetes passives nicht-ansteuerbares Leistungshalbleiterbauelement mit unidirektionaler Stromführungsrichtung gebildet ist.

14. Umrichterschaltung nach einem der vorhergehenden Ansprüche, **dadurch gekennzeichnet, dass** bei den n ersten Schaltgruppen (1.1,..., 1.n) die zwei ersten ansteuerbaren bidirektionalen Leistungshalbleiterschalter (2) jeweils benachbarter erster Schaltgruppen (1.1,..., 1.n) in einem Modul integriert sind und die zwei zweiten ansteuerbaren bidirektionalen Leistungshalbleiterschalter (3) jeweils benachbarter erster Schaltgruppen (1.1,..., 1.n) in einem Modul integriert sind.

15. Umrichterschaltung nach einem der Ansprüche 1 bis 13, **dadurch gekennzeichnet, dass** bei den n ersten Schaftgruppen (1.1,..., 1.n) jeweils der erste ansteuerbare bidirektionale Leistungshalbleiterschalter (2) und der zweite ansteuerbare bidirektionale Leistungshalbleiterschalter (3) in einem Modul integriert ist.

16. Umrichterschaltung nach einem der vorhergehenden Ansprüche, **dadurch gekennzeichnet, dass** bei den p zweiten Schaltgruppen (5.1,..., 5.p) die zwei ersten ansteuerbaren bidirektionalen Leistungshalbleiterschalter (7) jeweils benachbarter zweiter Schaltgruppen (5.1,..., 5.p) in einem Modul integriert sind, und
dass bei den p dritten Schaltgruppen (6.1,..., 6.p) die zwei ersten ansteuerbaren bidirektionalen Leistungshalbleiterschalter (8) jeweils benachbarter dritter Schaltgruppen (6.1,..., 6.p) in einem Modul integriert sind.

17. Umrichterschaltung nach einem der Ansprüche 1 bis 15, **dadurch gekennzeichnet, dass** bei den p zweiten und dritten Schaltgruppen (5.1,..,, 5.p; 6.1,..., 6.p) jeweils der erste ansteuerbare bidirektionale Leistungshalbleiterschalter (7, 8) und der zweite ansteuerbare bidirektionale Leistungshalbleiterschalter (9, 10) in einem Modul integriert ist.

18. Umrichterschaltung nach einem der Ansprüche 1 bis 17, **dadurch gekennzeichnet, dass** der dritte ansteuerbare bidirektionale Leistungshalbleiterschalter (11) der ersten zweiten Schaltgruppe (5.1) und der dritte ansteuerbare bidirektionale Leistungshalbleiterschalter (12) der ersten dritten Schaltgruppe (6.1) in einem Modul integriert ist.

19. Umrichterschaltung nach einem der vorhergehenden Ansprüche, **dadurch gekennzeichnet, dass** bei mehreren Phasen (R, S, T) die p-ten zweiten Schaltgruppen (5.p) der Phasen (R, S, T) parallel miteinander verbunden sind und die p-ten dritten Schaltgruppen (6.p) der Phasen (R, S, T) parallel miteinander verbunden sind.

20. Umrichterschaltung nach Anspruch 19, **dadurch gekennzeichnet, dass** die Kondensatoren (13) der p-ten zweiten Schaltgruppen (5.p) der Phasen (R, S, T) zu einem Kondensator zusammengefasst sind, und
dass die Kondensatoren (14) der p-ten dritten Schaltgruppen (6.p) der Phasen (R, S, T) zu einem Kondensator zusammengefasst sind.

## Claims

1. Converter circuit for switching of a multiplicity of switching voltage levels, having n ≥ 1 first switching groups (1.1, ..., 1.n) provided for each phase (R, Y, B), with the n-th first switching group (1.n) being formed by a first drivable bidirectional power semiconductor switch (2) and a second drivable bidirectional power semiconductor switch (3), and with the first first switching group (1.1) to the (n-1) -th switching group (1. (n-1)) each being formed by a first drivable bidirectional power semiconductor switch (2) and a second drivable bidirectional power semiconductor switch (3), and by a capacitor (4) which is connected to the first and second drivable bidirectional power semiconductor switches (2, 3) with each of the n first switching groups (1.1, ..., 1.n) being connected in a linked form to the respectively adjacent first switching group (1.1, ..., 1.n), and with the first and the second drivable bidirectional power semiconductor switches (2, 3) in the first first switching group (1.1) being connected to one another, **characterized**
**in that** p second switching groups (5.1, ..., 5.p) and p third switching groups (6.1, ..., 6.p) are provided, which each have a first drivable bidirectional power semiconductor switch (7, 8), a second drivable bidirectional power semiconductor switch (9, 10) and a capacitor (13, 14), with p ≥ 1 and each of the p second switching groups (5.1, ..., 5.p) being connected in a linked form to the respectively adjacent second switching group (5.1, ..., 5.p), and with each of the p third switching groups (6.1, ..., 6.p) being connected in a linked form to the respectively adjacent third switching group (6.1, ..., 6.p),
**in that** the first second and the first third switching group (5.1, 6.1) each have a third drivable bidirectional power semiconductor switch (11, 12) which is connected back-to-back in series with the respective second drivable bidirectional power semiconductor switch (9, 10), with the first second switching group (5.1) being connected to the first drivable bidirectional power semiconductor switch (2) in the n-th first switching group (1.n), and with the first third switching group (6.1) being connected to the second drivable bidirectional power semiconductor switch (3) in the n-th first switching group (1.n), and
**in that** the capacitor (13) in the p-th second switching group (5.p) is connected in series with the capacitor (14) in the p-th third switching group (6.p).

2. Converter circuit according to Claim 1, **characterized in that** the n-th first switching group (1.n) has a capacitor (4) which is connected to the first and second drivable bidirectional power semiconductor switches (2, 3) in the n-th first switching group (1.n), with the first second switching group (5.1) being connected to the capacitor (4) in the n-th first switching group (1.n), and with the first third switching group (6.1) being connected to the capacitor (4) in the n-th first switching group (1.n).

3. Converter circuit according to Claim 2, **characterized in that** the first and second drivable bidirectional power semiconductor switches (7, 9) in the first second switching group (5.1) are connected to one another, with the junction point of the first and second drivable bidirectional power semiconductor switches (7, 9) in the first second switching group (5.1) being connected to the junction point of the capacitor (4) in the n-th first switching group (1.n) and the first drivable bidirectional power semiconductor switch (2) in the n-th first switching group (1.n), and **in that** the first and third drivable bidirectional power semiconductor switches (8, 12) in the first third switching group (6.1) are connected to one another, with the junction point of the first and third drivable bidirectional power semiconductor switches (8, 12) in the first third switching group (6.1) being connected to the junction point of the capacitor (4) in the n-th first switching group (1.n) and the second drivable bidirectional power semiconductor switch (3) in the n-th first switching group (1.n).

4. Converter circuit according to one of Claims 1 to 3, **characterized in that**, in the first second switching group (5.1) the first and the third drivable bidirectional power semiconductor switches (7, 11) are connected to the capacitor (13) in the first second switching group (5.1), and
**in that**, in the first third switching group (6.1), the first and the second drivable bidirectional power semiconductor switches (8, 10) are connected to the capacitor (14) in the first third switching group (6.1).

5. Converter circuit according to one of Claims 1 to 4, **characterized in that** in the second second to the p-th second switching group (5.2, ..., 5.p) and in the second third to the p-th third switching group (6.2, ..., 6.p), the first and the second drivable bidirectional power semiconductor switches (7, 9, 8, 10) are respectively connected to the capacitor (13, 14) in the associated switching group (5.2, ..., 5.p; 6.2, ..., 6.p).

6. Converter circuit according to one of the preceding claims, **characterized in that** a voltage limiting network (15) is connected in parallel with the third drivable bidirectional power semiconductor switch (11) in the first second switching group (5.1), and
**in that** a voltage limiting network (15) is connected in parallel with the third drivable bidirectional power semiconductor switch (12) in the first third switching group (6.1).

7. Converter circuit according to one of Claims 1 to 5, **characterized in that** a voltage limiting network (15) is connected to the junction point of the second and third drivable power semiconductor switches (9, 11) in the first second switching group (5.1) and to the junction point of the second and third drivable power semiconductor switches (10, 12) in the first third switching group (6.1).

8. Converter circuit according to Claim 6 or 7, **characterized in that** the voltage limiting network (15) has a capacitor.

9. Converter circuit according to Claim 6 or 7, **characterized in that** the voltage limiting network (15) has a series circuit of a resistor with a capacitor.

10. Converter circuit according to one of Claims 1 to 9, **characterized in that** the total number of the n first switching groups (1.1, ..., 1.n) corresponds to the total number of p second and third switching groups (5.1, ..., 5.p; 6.1, ..., 6.p).

11. Converter circuit according to one of Claims 1 to 9, **characterized in that** the total number of the n first switching groups (1.1, ..., 1.n) is less than the total number of p second and third switching groups (5.1, ..., 5.p; 6.1, ..., 6.p).

12. Converter circuit according to one of Claims 1 to 9, **characterized in that** the total number of the n first switching groups (1.1, ..., 1.n) is greater than the total number of p second and third switching groups (5.1, ..., 5.p; 6.1, ..., 6.p).

13. Converter circuit according to one of the preceding claims, **characterized in that** the respective first, second and third drivable bidirectional power semiconductor switches (2, 3, 7, 8, 9, 10, 11, 12) are formed by a drivable power semiconductor component which carries current in one direction, and by a passive non-drivable power semiconductor component, which is connected back-to-back in parallel with it and carries current in one direction.

14. Converter circuit according to one of the preceding claims, **characterized in that**, in the n first switching groups (1.1, ..., 1.n), the two first drivable bidirectional power semiconductor switches (2) in the respectively adjacent first switching groups (1.1, ..., 1.n) are integrated in one module, and the two second drivable bidirectional power semiconductor switches (3) in the respectively adjacent first switching groups (1.1, ...., 1.n) are integrated in one module.

15. Converter circuit according to one of Claims 1 to 13, **characterized in that**, in the n first switching groups (1.1, ..., 1.n), the first drivable bidirectional power semiconductor switch (2) and the second drivable bidirectional power semiconductor switch (3) are each integrated in one module.

16. Converter circuit according to one of the preceding claims, **characterized in that**, in the p second switching groups (5.1, ..., 5.p), the two first drivable bidirectional power semiconductor switches (7) in the respectively adjacent second switching groups (5.1, ..., 5.p) are integrated in one module, and **in that**, in the p third switching groups (6.1, ..., 6.p) the two first drivable bidirectional power semiconductor switches (8) in the respectively adjacent third switching groups (6.1, ..., 6.p) are integrated in one module.

17. Converter circuit according to one of Claims 1 to 15, **characterized in that**, in the p second and third switching groups (5.1, ..., 5.p; 6.1, ..., 6.p) the first drivable bidirectional power semiconductor switches (7, 8) and the second drivable bidirectional power semiconductor switches (9, 10) are each integrated in one module.

18. Converter circuit according to one of Claims 1 to 17, **characterized in that** the third drivable bidirectional power semiconductor switch (11) in the first second switching group (5.1), and the third drivable bidirectional power semiconductor switch (12) in the first third switching group (6.1) are integrated in one module.

19. Converter circuit according to one of the preceding claims, **characterized in that**, when there are a plurality of phases (R, Y, B), the p-th second switching groups (5.p) of the phases (R, Y, B) are connected to one another in parallel, and the p-th third switching groups (6.p) of the phases (R, Y, B) are connected to one another in parallel.

20. Converter circuit according to Claim 19, **characterized in that** the capacitors (13) in the p-th second switching groups (5.p) of the phases (R, Y, B) are combined to form one capacitor, and **in that** the capacitors (14) in the p-th third switching groups (6.p) of the phases (R, Y, B) are combined to form one capacitor.

## Revendications

1. Circuit redresseur destiné à raccorder plusieurs niveaux de tensions de commutation et présentant n ≥ 1 premiers groupes de commutation (1.1,..., 1.n) prévus pour chaque phase (R, S, T),
le n-ème premier groupe de commutation (1.n) étant formé par un premier commutateur de puissance (2) à semi-conducteur commandé de manière bidirectionnelle et un deuxième commutateur de puissance (3) à semi-conducteur commandé de manière bidirectionnelle,
le premier groupe de commutation (1.1) jusqu'au (n-1)-ème groupe de commutation (1.(n-1)) étant tous formés par un premier commutateur de puissance (2) à semi-conducteur commandé de manière bidirectionnelle, un deuxième commutateur de puissance (3) à semi-conducteur commandé de manière bidirectionnelle et un condensateur (4) raccordé au premier et au deuxième commutateur de puissance (2, 3) à semi-conducteur commandés de manière bidirectionnelle,
chacun des n premiers groupes de commutation (1.1,..., 1.n) étant raccordé en chaîne à chaque premier groupe de commutation (1.1,..., 1.n) voisin et le premier et le deuxième commutateur de puissance (2, 3) à semi-conducteur commandés de manière bidirectionnelle du premier premier groupe de gravitation (1.1) étant raccordés mutuellement, **caractérisé en ce que**
p deuxièmes groupes de commutation (5.1,..., 5.p) et p troisièmes groupes de commutation (6.1,..., 6.p) sont prévus et présentent chacun un premier commutateur de puissance (7, 8) à semi-conducteur commandé de manière bidirectionnelle et un deuxième commutateur de puissance (9, 10) à semi-conducteur commandé de manière bidirectionnelle ainsi qu'un condensateur (13, 14), p ≥ 1 et chacun des p deuxièmes groupes de commutation (5.1,..., 5.p) étant raccordé en chaîne à chaque deuxième groupe de commutation (5.1,..., 5.p) voisin, chacun des p troisièmes groupes de commutation (6.1,..., 6.p) étant raccordé en chaîne à chaque troisième groupe de commutation (6.1,..., 6.p) voisin,
**en ce que** le premier deuxième et le premier troisième groupe de commutation (5.1, 6.1) présentent chacun un troisième commutateur de puissance (11, 12) à semi-conducteur commandé de manière bidirectionnelle raccordé en anti-série au deuxième commutateur de puissance (9, 10) à semi-conducteur commandé de manière bidirectionnelle respectif, le premier deuxième groupe de commutation (5.1) étant raccordé au premier commutateur de puissance (2) à semi-conducteur commandé de manière bidirectionnelle du n-ème premier groupe de commutation (1.n) et le premier troisième groupe de commutation (6.1) étant raccordé au deuxième commutateur de puissance (3) à semi-conducteur commandé de manière bidirectionnelle du n-ème premier groupe de commutation (1.n) et
**en ce que** le condensateur (13) du p-ème deuxième groupe de commutation (5.p) est raccordé en série au condensateur (14) du p-ème troisième groupe de commutation (6.p).

2. Circuit redresseur selon la revendication 1, **caractérisé en ce que** le n-ème premier groupe de commutation (1.n) présente un condensateur (4) raccordé au premier et au deuxième commutateur de puissance (2, 3) à semi-conducteur commandés de manière bidirectionnelle du n-ème première groupe de commutation (1.n), le premier deuxième groupe de commutation (5.1) étant raccordé au condensateur (4) du n-ème premier groupe de commutation (1.n) et le premier troisième groupe de commutation (6.1) étant raccordé au condensateur (4) du n-ème premier groupe de commutation (1.n).

3. Circuit redresseur selon la revendication 2, **caractérisé en ce que** le premier et le deuxième commutateur de puissance (7, 9) à semi-conducteur commandés de manière bidirectionnelle du premier deuxième groupe de commutation (5.1) sont raccordés l'un à l'autre, le point de raccordement du premier et du deuxième commutateur de puissance (7, 9) à semi-conducteur commandés de manière bidirectionnelle du premier et deuxième groupe de commutation (5.1) étant raccordés au point de raccordement du condensateur (4) du n-ème premier groupe de commutation (1.n) et au premier commutateur de puissance (2) à semi-conducteur commandé de manière bidirectionnelle du n-ème premier groupe de commutation (1.n) et **en ce que** le premier et le troisième commutateur de puissance (8, 12) à semi-conducteur commandés de manière bidirectionnelle du premier troisième groupe de commutation (6.1) sont raccordés l'un à l'autre, le point de raccordement du premier et du troisième commutateur de puissance (8, 12) à semi-conducteur commandés de manière bidirectionnelle du premier et troisième groupe de commutation (6.1) étant raccordés au point de raccordement du condensateur (4) du n-ème premier groupe de commutation (1.n) et au deuxième commutateur de puissance (3) à semi-conducteur commandé de manière bidirectionnelle du n-ème premier groupe de commutation (1.n).

4. Circuit redresseur selon l'une des revendications 1 à 3, **caractérisé en ce que** dans le premier et deuxième groupe de commutation (5.1), le premier et le troisième commutateur de puissance (7, 11) à semi-conducteur commandés de manière bidirectionnelle sont reliés au condensateur (13) du premier et deuxième groupe de commutation (5.1) et **en ce que** dans le premier et troisième groupe de commutation (6.1), le premier et le deuxième commutateur de puissance (8, 10) à semi-conducteur commandés de manière bidirectionnelle sont raccordés au condensateur (14) du premier et troisième groupe de commutation (6.1).

5. Circuit redresseur selon l'une des revendications 1 à 4, **caractérisé en ce que** dans les deuxièmes groupes de commutation (5.2,..., 5.p) deux à p et dans les deuxièmes groupes de commutation (6.2,..., 6.p) trois à p, le premier et le deuxième commutateur de puissance (7, 9, 8, 10) à semi-conducteur commandés de manière bidirectionnelle sont raccordés au condensateur (13, 14) du groupe de commutation (5.2,..., 5.p; 6.2,..., 6.p) associé.

6. Circuit redresseur selon l'une des revendications précédentes, **caractérisé en ce qu'**un réseau (15) de limitation de tension est raccordé en parallèle au troisième commutateur de puissance (11) à semi-conducteur commandé de manière bidirectionnelle du premier et deuxième groupe de commutation (5.1) et **en ce qu'**un réseau (15) de limitation de tension est raccordé en parallèle au troisième commutateur de puissance (12) à semi-conducteur commandé de manière bidirectionnelle du premier et troisième groupe de commutation (6.1).

7. Circuit redresseur selon l'une des revendications 1 à 5, **caractérisé en ce qu'**un réseau (15) de limitation de tension est raccordé au point de raccordement du deuxième et du troisième commutateur de puissance (9, 11) à semi-conducteur commandés du premier deuxième groupe de commutation (5.1) et au point de raccordement du deuxième et du troisième commutateur de puissance (10, 12) à semi-conducteur commandés du premier et troisième groupe de commutation (6.1).

8. Circuit redresseur selon les revendications 6 ou 7, **caractérisé en ce que** le réseau (15) de limitation de tension présente un condensateur.

9. Circuit redresseur selon les revendications 6 ou 7, **caractérisé en ce que** le réseau (15) de limitation de tension présente le circuit série formé par une rédistance et un condensateur.

10. Circuit redresseur selon l'une des revendications 1 à 9, **caractérisé en ce que** le nombre n de premiers groupes de commutation (1.1,..., 1.n) correspond au nombre p de deuxièmes et troisièmes groupes de commutation (5.1,..., 5.p; 6.1,..., 6.p).

11. Circuit redresseur selon l'une des revendications 1 à 9, **caractérisé en ce que** le nombre n de premiers groupes de commutation (1.1,..., 1.n) est plus petit que le nombre des p deuxièmes et troisièmes groupes de commutation (5.1,..., 5.p; 6.1,..., 6.p).

12. Circuit redresseur selon l'une des revendications 1 à 9, **caractérisé en ce que** le nombre n de premiers groupes de commutation (1.1,..., 1.n) est supérieur au nombre des p deuxièmes et troisièmes groupes de commutation (5.1,..., 5.p; 6.1,..., 6.p).

13. Circuit redresseur selon l'une des revendications précédentes, **caractérisé en ce que** chaque premier, deuxième et troisième commutateur de puissance (2, 3, 7, 8, 9, 10, 11, 12) à semi-conducteur commandés de manière bidirectionnelle est formé par un composant semi-conducteur de puissance commandé dans lequel le courant est guidé de manière unidirectionnelle et par un composant semi-conducteur de puissance passif non commandé dans lequel le courant est guidé de manière unidirectionnelle, raccordés de manière antiparallèle.

14. Circuit redresseur selon l'une des revendications précédentes, **caractérisé en ce que** dans les n premiers groupes de commutation (1.1,..., 1.n), les deux premiers commutateurs de puissance (2) à semi-conducteur commandés de manière bidirectionnelle de deux premiers groupes de commutation (1.1,..., 1.n) voisins sont intégrés en un module et **en ce que** les deux deuxièmes commutateurs de puissance (3) à semi-conducteur commandés de manière bidirectionnelle de deux premiers groupes de commutation (1.1,..., 1.n) voisins sont intégrés en un module.

15. Circuit redresseur selon l'une des revendications 1 à 13, **caractérisé en ce que** dans les n premiers groupes de commutation (1.1,..., 1.n), le premier commutateur de puissance (2) à semi-conducteur commandé de manière bidirectionnelle et le deuxième commutateur de puissance (3) à semi-conducteur commandé de manière bidirectionnelle sont intégrés dans un module.

16. Circuit redresseur selon l'une des revendications précédentes, **caractérisé en ce que** dans les p deuxièmes groupes de commutation (5.1,..., 5.p), les deux premiers commutateurs de puissance (7) à semi-conducteur commandés de manière bidirectionnelle de deux groupes de commutation (5.1,..., 5.p) voisins sont intégrés en un module et **en ce que** dans les p troisièmes groupes de commutation (6.1,..., 6.p), les deux premiers commutateurs de puissance (8) à semi-conducteur commandés de manière bidirectionnelle de deux troisièmes groupes de commutation (6.1,..., 6.p) sont intégrés en un module.

17. Circuit redresseur selon l'une des revendications 1 à 15, **caractérisé en ce que** dans les p deuxièmes et troisièmes groupes de commutation (5.1,..., 5.p; 6.1,..., 6.p), le premier commutateur de puissance (7, 8) à semi-conducteur commandé de manière bidirectionnelle et le deuxième commutateur de puissance (9, 10) à semi-conducteur commandé de manière bidirectionnelle sont intégrés en un module.

18. Circuit redresseur selon l'une des revendications 1 à 17, **caractérisé en ce que** le troisième commutateur de puissance (11) à semi-conducteur commandé de manière bidirectionnelle du premier deuxième groupe de commutation (5.1) et le troisième commutateur de puissance (12) à semi-conducteur commandé de manière bidirectionnelle du premier troisième groupe de commutation (6.1) sont intégrés en un module.

19. Circuit redresseur selon l'une des revendications précédentes, **caractérisé en ce que** pour plusieurs phases (R, S, T), les p deuxièmes groupes de commutation (5.p) des phases (R, S, T) sont raccordés mutuellement en parallèle et les p troisièmes groupes de commutation (6.p) des phases (R, S, T) sont raccordés mutuellement en parallèle.

20. Circuit redresseur selon la revendication 19, **caractérisé en ce que** les condensateurs (13) des p-èmes deuxièmes groupes de commutation (5.p) des phases (R, S, T) sont rassemblés en un condensateur et **en ce que** les condensateurs (14) des p-èmes troisièmes groupes de commutation (6.p) des phases (R, S, T) sont rassemblés en un condensateur.
